# EUROPEAN PATENT SPECIFICATION

(11) **EP 1 098 100 B1**
(45) Date of publication and mention of the grant of the patent: **09.03.2005**
(21) Application number: 99830688.0
(22) Date of filing: 02.11.1999
(51) Int. Cl.: F16D 43/18

(54) **Portable handheld motor-driven tool for use in farming and gardening works**
Tragbares motorgetriebenes Gerät zur Verwendung in Landwirtschaft oder Gartenarbeit
Outil portatif motorisé pour travaux agricoles ou de jardinage

(43) Date of publication of application: 09.05.2001
(73) Proprietor: Active S.R.L., 26037 S.Giovanni in Croce (CR) (IT)
(72) Inventor: Griffini, Alberto, I-26037 Pontirolo (CR) (IT)
(74) Representative: Robba, Pierpaolo

(56) References cited:
- EP-A- 0 606 594
- FR-A- 2 639 175
- FR-A- 2 763 658
- US-A- 4 006 528
- US-A- 4 254 854
- US-A- 4 756 396
- US-A- 4 909 344

## Description

This invention relates to a centrifugal clutch and to a portable handheld power tool or implement for use in farming and gardening works, comprising a motor, a motor housing and a rod for carrying a tool driven by said motor, of the type in which said motor can be mechanically disengaged from the tool through an improved centrifugal clutch.

Power tools or devices of this type are for instance the bush-cutters or rotary mowers, the tree shaking devices for harvesting fruit, the chain saws, the hedge-trimmers and so on.

These portable handheld tools for use in farming and gardening works are equipped with an endothermic motor located outside of the tool housing. Besides, in these machines, also for safety reasons it is necessary to mechanically disengage the motor from the cutting element (cutting disc, blades, chains, rotary head with nylon cord and so on) during the starting phase of motor, or when the motor is running at the minimum rotation speed.

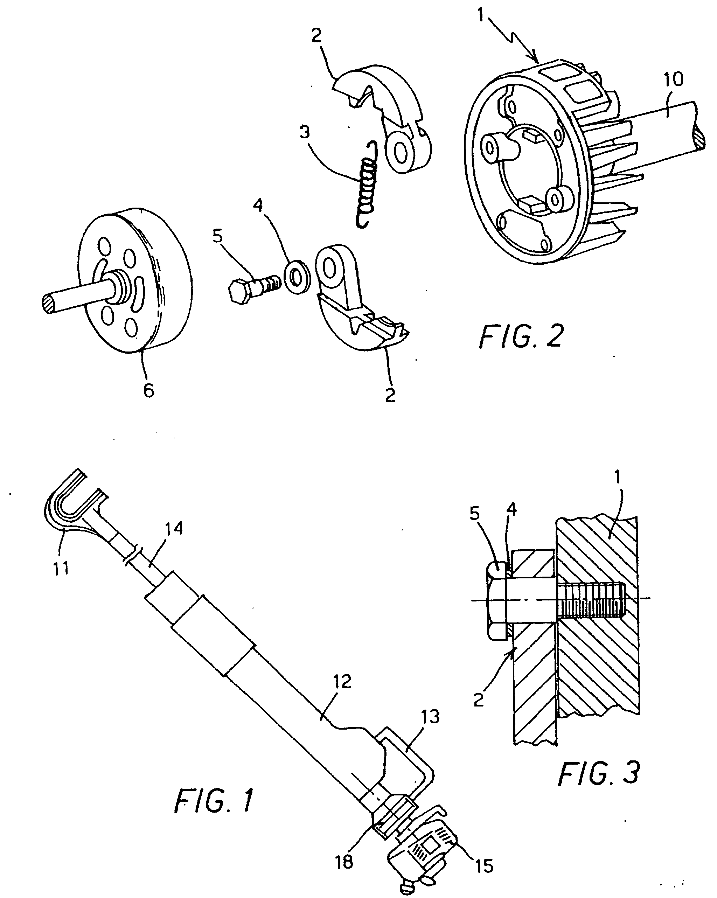

To this purpose, a centrifugal clutch - as illustrated in Figures 2 and 3 - is inserted between the motor and a gear transmission (comprising shafts, gears, and so on), such clutch consisting of a clutch support body 1, generally acting also as ignition/fan flywheel, two or more clutch heavy friction shoes 2 connected to one another by a return spring 3, a screw 5 for fastening of parts together, a clearance compensating washer 4, and a clutch drum or bowl 6. The body 1 is connected with a shaft 10 of an endothermic or i.c. engine (not shown in Figure 2), while the clutch drum 6 is fastened to the tool drive shaft.

When the motor is accelerated, also the rotating speed of the body 1 increases since this latter is secured to the drive shaft 10. Since moreover the centre of gravity of the friction shoes or flyweight 2 is located at a certain distance from the fulcrum (coinciding with the axis of the fastening screw 5), the centrifugal force acting onto the friction shoes 2 expands the same by stretching the return spring 3 until they adhere - like brake shoes - to the inner surface of the clutch drum 6.

As the clutch friction shoes 2 must be free to rotate around the axis of the screw 5, this latter provides for a clearance or play between the screw head and the friction shoe. In the devices of prior art, as illustrated more in detail in Figure 3, this is obtained by forming the seat with a length higher than the thickness of the friction shoes 2, in order to leave a play between the screw head and the surface of the friction shoe, with a compensating washer 4 fitted in the space between them.

Besides the inconvenience of an inaccurate play adjustment, this solution has the drawback of a severe wear caused by the rubbing of the compression washer 4. Moreover, after a certain number of engagement and disengagement cycles, the rubbing between the seat of the friction shoe 2 and the fastening screw 5 can lead to a damage. In particular, wear is remarkably enlarged in a shaking device for collecting fruits, where large and frequent axial motions of the motor occur in the axial direction (up to 2,000 per minute). Therefore, a scraping axial effect is added to the rotational wear of the friction shoe pressing the drum during the transients.

An object of the present invention is to overcome the above mentioned drawbacks of the known devices, and more particularly to provide an unhindered rotation of the clutch friction shoes, by avoiding a coupling that could negatively affect the machine operation and cause a wear-and-tear reducing its useful life.

According to the invention, these objects are achieved by a tool as claimed in claim 1 and a centrifugal clutch as claimed in claim 7. Further advantageous characteristics of the invention are recited in the dependent claims.

More particularly, the invention eliminates the axial and radial plays between the friction shoes and the screw for rotatably securing the friction shoes to the clutch mounting bracket.

A description of the invention is provided hereafter with reference to the accompanying drawings illustrating preferred but non limiting embodiments thereof, in which:
Figure 1 is a perspective scrap sectional view of a shaking device according to the present invention;
Figure 2 is an exploded perspective scrap view illustrating a clutch of the prior art;
Figure 3 is a sectional view of a detail of Figure 2;
Figure 4 is an exploded perspective scrap view illustrating an improved clutch according to the invention;
Figure 5 is a partial section illustrating with more detail the present invention.

Throughout all the Figures, the same numeral references are used to indicate equal or substantially corresponding parts.

In the following the present invention shall be illustrated with particular reference to a tree shaking device for collecting fruits, nevertheless the present invention generally applies to a plurality of portable handheld power tools or implements for use in farming and gardening works, such power tools comprising a motor, a motor housing and a rod carrying an end tool driven by the motor (usually of i.c. type), such motor being located outside the tool and being adapted to be selectively disengaged from the end tool.

Firstly referring to Figure 1, a shaking device for harvesting fruit according to the present invention comprises a housing 12 provided with at least one handle 13, a rod 14 projecting from the housing and equipped with an end tool 11 driven by a motor or engine 15. The motor 15 is mounted outside of housing and is connected to an inner drive mechanism of the tool through a clutch 18 according to the invention.

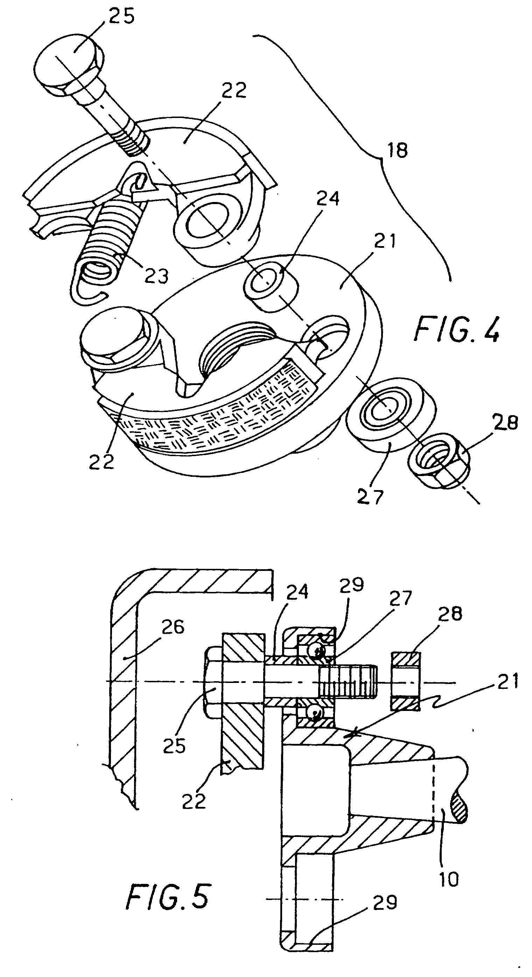

With reference to Figures 4 and 5, the centrifugal clutch 18 comprises a clutch support or body 21 connected to the motor shaft 10, to which body there are mounted two or more heavy friction shoes 22 connected to each other by a return spring 23 and rotatably secured to the body 1 by a screw 25. The heavy friction shoes 22, through a radial motion caused the centrifugal force generated by the rotation of body 21, can engage the clutch drum 26 fastened to the driven shaft.

According to the invention, in the clutch body 21 there are formed seats 29 (one for each friction shoe in the device), adapted to house as many supporting members 27, in particular bearings 27, preferably ball bearings. Besides, a spacing projection 24 is formed in the clutch body on the opposite side of the seat(s).

When assembling the friction shoes 2 , a nut 28 is screwed onto the screw 25 and keeps the clutch friction shoes integral with the spacer 24 and the inner ring of bearing 27, thus preventing any rubbing motion between the friction shoes 22 and the fastening screw 25, while an unhindered rotation of the friction shoe 22 is nevertheless ensured by the presence of bearing 27 which is fastened by interference (i.e. forced) to bore 29.

The spacer 24 can be either an integral part of the friction shoe 2 or a steel bushing separately provided for.

Although the invention has been illustrated with reference to preferred embodiments, the same is generally subjected to other applications and modifications, falling within the invention as will be evident to the skilled of the art.

In particular, in a bush-cutter an improved clutch according to the invention shall be inserted between the motor and the drive mechanism for rotating a shaft at the end of which a nylon cord head is fitted. The modifications of other power tools machines to which said device is applicable, such as for instance chain saws, hedge-trimmers and so on, are not illustrated in detail since they are evident to the skilled of the art.

## Claims

1. A centrifugal clutch (18) for a portable power tool to be used in farming and gardening works, comprising a clutch body (21) and at least one friction shoe (22) rotatably mounted to said body and adapted to engage a clutch drum (26) when it is rotated, **characterised in that** said at least one friction shoe (22) is mounted to said clutch body (21) through a rotatable supporting member (27) housed in a seat (29) formed in said body (21).

2. A clutch as claimed in claim 1, **characterised in that** it comprises two clutch friction shoes (22) connected to each other by a return spring (23) and fastened to said body (21) by a screw (25) passing through a bore formed in said clutch body (21).

3. A clutch as claimed in claims 1 or 2, **characterised in that** said, at least one supporting member (27) is a ball bearing.

4. A clutch as claimed in claims 1 to 3, **characterised in that** it further comprises a spacing projection (24) formed on said clutch body (21), on the opposite side of said seats (29).

5. A portable handheld power tool for use in farming and gardening works, comprising a motor (15), a motor housing (12) and a rod (14) carrying an end tool (11) driven by said motor (15), in which said motor (15) can be mechanically disengaged from said end tool (11) through a centrifugal clutch (18) comprising a clutch body (21) fastened to said motor (15), to which body at least one clutch friction shoe (22) is rotatably mounted in order to engage a clutch drum (26) fastened to a driving mechanism of said rod (14), **characterised in that** each of said clutch friction shoes (22) is rotatably mounted on said clutch body (21) through a rotatable supporting member (27) housed in a seat (29) formed into said body (21).

6. A power tool as claimed in claim 5, **characterised in that** it comprises two clutch friction shoes (22) connected to each other by a return spring (23) and fastened to said body (21) by a screw (25) passing through a bore in said clutch body (21).

7. A power tool as claimed in claims 5 or 6, **characterised in that** said at least one supporting member (27) is a ball bearing.

8. A power tool as claimed in the preceding claims 5 to 7, **characterised in that** it further comprises a spacing projection (24) formed on said clutch body, on the opposite side of said seats (29).

9. A power tool as claimed in the preceding claims 5 to 8, **characterised in that** said supporting member (27) is forcedly fitted into the seat (29) of said support (21).

10. A power tool as claimed in the preceding claims 5 to 9, **characterised in that** said power tool is a tree shaking device for collecting fruits.

## Patentansprüche

1. Eine Fliehkraftkupplung (18) für ein tragbares Motorgerät zur Verwendung in der Landwirtschaft und bei der Gartenarbeit weist einen Kupplungskörper (21) und mindestens eine auf jenem Körper drehbar montierte Bremsbacke (22) auf, dazu ausgelegt, bei Drehung in Eingriff mit einer Kupplungstrommel (26) zu kommen und ist
**dadurch gekennzeichnet, daß** mindestens eine Bremsbacke (22) mittels eines drehbaren Stützelements (27), das in einem in jenem Körper (21) gebildeten Sitz (29) untergebracht ist, an jenem Kupplungskörper montiert ist.

2. Kupplung nach Anspruch 1,
**dadurch gekennzeichnet, daß** sie zwei Reibungskupplungsbacken (22) aufweist, die durch eine Rückholfeder (23) miteinander verbunden sind und an jenem Körper (21) durch eine Schraube (25) befestigt sind, die eine in jenem Kupplungskörper (21) ausgebildete Bohrung durchdringt.

3. Kupplung nach Anspruch 1 oder 2,
**dadurch gekennzeichnet, daß** mindestens ein Stützelement (27) ein Kugellager ist.

4. Kupplung nach den Ansprüchen 1 bis 3,
**dadurch gekennzeichnet, daß** sie außerdem eine auf der den Sitzen (29) gegenüberliegenden Seite jenes Kupplungskörpers (21) ausgebildete Auskragung (24) aufweist.

5. Tragbares motorgetriebenes Gerät zur Verwendung in der Landwirtschaft und bei der Gartenarbeit, das einen Motor (15), ein Motorgehäuse (12) und eine Stange (14) aufweist, die ein von jenem Motor angetriebenes Werkzeug (11) trägt, wobei jener Motor (15) mechanisch von jenem Werkzeug (11) durch eine Fliehkraftkupplung (18) getrennt werden kann, die einen an jenem Motor (15) befestigten Kupplungskörper (21) aufweist, an dem mindestens ein Friktionsschuh (22) drehbar montiert ist, um mit einer Kupplungstrommel (26) in Eingriff zu kommen, die am Antriebsstrang jener Stange (14) befestigt ist,
**dadurch gekennzeichnet, daß** jede dieser Reibungskupplungsbacken (22) durch eine drehbares Stützelement (27), das in einem in jenem Körper (21) gebildeten Sitz (29) untergebracht ist, drehbar an jenem Kupplungskörper (21) angebracht ist.

6. Motorgetriebenes Gerät nach Anspruch 5,
**dadurch gekennzeichnet, daß** es zwei Reibungskupplungsbacken (22) aufweist, die durch eine Rückholfeder (23) miteinander verbunden sind und an jenem Körper (21) durch eine Schraube (25) befestigt sind, die eine in jenem Kupplungskörper (21) ausgebildete Bohrung durchdringt.

7. Motorgetriebenes Gerät nach Anspruch 5 oder 6,
**dadurch gekennzeichnet, daß** mindestens ein Stützelement (27) ein Kugellager ist.

8. Motorgetriebenes Gerät nach den vorhergehenden Ansprüchen 5 bis 7,
**dadurch gekennzeichnet, daß** es außerdem eine auf der den Sitzen (29) gegenüberliegenden Seite jenes Kupplungskörpers ausgebildete Auskragung (24) aufweist.

9. Motorgetriebenes Gerät nach den vorhergehenden Ansprüchen 5 bis 8,
**dadurch gekennzeichnet, daß** jenes Stützelement (27) mit Preßpassung in der Aufnahme (29) jenes Trägers (21) sitzt.

10. Motorgetriebenes Gerät nach den vorhergehenden Ansprüchen 5 bis 9,
**dadurch gekennzeichnet, daß** jenes motorgetriebene Gerät eine Baumschütteleinrichtung zur Ernte von Früchten ist.

## Revendications

1. Embrayage centrifuge (18) destiné à un outil électrique portable à utiliser pour les travaux agricoles ou de jardinage, comprenant un corps d'embrayage (21) et au moins une semelle de friction (22) fixée à rotation sur ledit corps et adaptée pour engager un tambour d'embrayage (26) lorsqu'il est en rotation, **caractérisé en ce que** ladite (lesdites) semelle(s) de friction (22) est (sont) fixée(s) audit corps d'embrayage (21) par l'intermédiaire d'un élément de support rotatif (27) logé dans une embase (29) formée dans ledit corps (21).

2. Embrayage selon la revendication 1, **caractérisé en ce qu'**il comprend deux semelles de friction d'embrayage (22) connectées l'une à l'autre par un ressort de rappel (23) et attachées audit corps (21) par une vis (25) passant à travers un alésage formé dans ledit corps d'embrayage (21).

3. Embrayage selon les revendications 1 ou 2, **caractérisé en ce que** ledit au moins un élément de support (27) est un roulement à billes.

4. Embrayage selon les revendications 1 à 3, **caractérisé en ce qu'**il comprend, de plus, une partie d'espacement en saillie (24) formée sur ledit corps d'embrayage (21), sur le côté opposé desdites embases (29).

5. Outil électrique portable, tenu à la main, à utiliser dans des travaux d'agriculture ou de jardinage, comprenant un moteur (15), un logement de moteur (12) et une tige (14) portant un outil d'extrémité (11) entraîné par ledit moteur (15), dans lequel ledit moteur (15) peut être désengagé mécaniquement dudit outil d'extrémité (11) par l'intermédiaire d'un embrayage centrifuge (18) comprenant un corps d'embrayage (21) fixé audit moteur (15), corps auquel au moins une semelle de friction d'embrayage (22) est fixée à rotation afin d'engager un tambour d'embrayage (26) attaché à un mécanisme de commande de ladite tige (14), **caractérisé en ce que** chacune desdites semelles de friction d'embrayage (22) est fixée à rotation sur ledit corps d'embrayage (21) par un élément de support rotatif (27) logé dans une embase (29) formée dans ledit corps (21).

6. Outil électrique selon la revendication 5, **caractérisé en ce qu'**il comprend deux semelles de friction d'embrayage (22) connectées l'une à l'autre par un ressort de rappel (23) et fixées audit corps (21) par une vis (25) passant à travers un alésage formé dans ledit corps d'embrayage (21).

7. Outil électrique selon les revendications 5 ou 6, **caractérisé en ce que** ledit au moins un élément de support (27) est un roulement à billes.

8. Outil électrique selon les revendications précédentes 5 à 7, **caractérisé en ce qu'**il comprend, de plus, une partie d'espacement en saillie (24) formée sur ledit corps d'embrayage, sur le côté opposé desdites embases (29).

9. Outil électrique selon les revendications précédentes 5 à 8, **caractérisé en ce que** ledit élément de support (27) est ajusté à force dans l'embase (29) dudit support (21).

10. Outil électrique selon les revendications précédentes 5 à 9, **caractérisé en ce que** ledit outil électrique est un dispositif de secouage des arbres destiné à la récolte des fruits.
